(19) Europäisches Patentamt
European Patent Office
Office européen des brevets

(11) EP 0 716 114 B1

(12) **EUROPÄISCHE PATENTSCHRIFT**

(45) Veröffentlichungstag und Bekanntmachung des Hinweises auf die Patenterteilung:
**04.03.1998 Patentblatt 1998/10**

(51) Int. Cl.$^6$: **C08G 77/38**, C09D 183/06

(21) Anmeldenummer: **95119302.8**

(22) Anmeldetag: **07.12.1995**

# (54) (Meth)acryloxygruppen aufweisende Organosiliciumverbindungen, deren Herstellung und Verwendung

(Meth)acryloxy-functional organosilicon compounds, their preparation and their use

Composés organosiliciés comportant des groupes (méth)acryloxy, leur préparation et leur utilisation

(84) Benannte Vertragsstaaten:
**AT BE DE FR GB IT NL**

(30) Priorität: **08.12.1994 DE 4443749**

(43) Veröffentlichungstag der Anmeldung:
**12.06.1996 Patentblatt 1996/24**

(73) Patentinhaber:
**Wacker-Chemie GmbH**
**81737 München (DE)**

(72) Erfinder:
- **Dauth, Jochen, Dr.**
  **D-84489 Burghausen (DE)**
- **Herzig, Christian, Dr.**
  **D-83329 Feichten-Waging (DE)**
- **Deubzer, Bernward, Dr.**
  **D-84489 Burghausen (DE)**
- **Hierstetter, Thomas, Dr.**
  **D-84489 Burghausen (DE)**
- **Gratzl, Petra**
  **D-84577 Tüssling (DE)**

(74) Vertreter:
**Deffner-Lehner, Maria et al**
**Wacker-Chemie GmbH,**
**Hanns-Seidel-Platz 4**
**81737 München (DE)**

(56) Entgegenhaltungen:
**EP-A- 0 284 863**
**EP-A- 0 503 668**
**EP-A- 0 508 491**
**WO-A-92/05854**
**DE-A- 4 325 359**

Bemerkungen:
Die Akte enthält technische Angaben, die nach dem Eingang der Anmeldung eingereicht wurden und die nicht in dieser Patentschrift enthalten sind.

EP 0 716 114 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Xerox (UK) Business Services
2.15.12/3.4

## Beschreibung

Gemäß US-A 4,405,208 werden Acryloxygruppen aufweisende Organopolysiloxane in einer Hydrosilylierungsreaktion durch Umsetzung von Organopolysiloxan mit Si-gebundenem Wasserstoff mit Propargyl(meth)acrylat erhalten. Der zur Herstellung des Propargyl(meth)acrylats eingesetzte Propargylalkohol weist eine verhältnismäßig hohe Toxizität auf, und die Veresterung von Propargylalkohol mit (Meth)acrylsäure ergibt schlechte Ausbeuten.

Aus EP-A 130 731 ist die Umsetzung von Organopolysiloxan mit Si-gebundenem Wasserstoff mit Beta(allyloxy)ethylmethacrylat in Gegenwart eines Hydrosilylierungskatalysators bekannt. Hierbei werden Methacryloxygruppen aufweisende Organopolysiloxane erhalten. Acryloxygruppen aufweisende Organopolysiloxane sind durch analoge Umsetzung nicht selektiv erhältlich, da die Hydrosilylierung sowohl am Acryl- als auch am Allylrest auftritt.

US-A 5,214,077 beschreibt die Umsetzung von Silanen und Organopolysiloxan mit Si-gebundenem Wasserstoff mit Alkinyloxy(meth)acrylaten in Gegenwart eines Hydrosilylierungskatalysators. Hierbei wird pro Si-Atom maximal eine (Meth)acrylgruppe addiert.

In DD-A 298 404 wird ein Verfahren zur Herstellung von Siloxanylalkendiyl-bis(meth)acrylaten beschrieben. Hierbei wird Organopolysiloxan mit Si-gebundenem Wasserstoff mit But-2-in-dimethacrylat-1,4 in Gegenwart eines Hydrosilylierungskatalysators umgesetzt. Es werden dabei toxische organische Monomere, wie But-2-in-dimethacrylat-1,4 und But-2-in-diol-1,4, aus dem durch Umsetzung mit Methacrylsäure das Dimethacrylat erhalten wird, eingesetzt.

Aus US-A 4,940,766 ist bekannt, daß Polysiloxane mit Hydroxyalkylgruppen durch Umesterung mit (Meth)acrylsäurealkylestern unter Zinnkatalyse entsprechend mit (Meth)acrylsäureestergruppen funktionalisiert werden können, wobei auch hier ein Si-Atom nur maximal mit einer funktionellen Gruppe substituiert sein kann.

Aus DD-A 255 737 sind Siloxanyl-alkendiyl-bis-ω-hydroxypolyoxyalkylene sowie deren Verwendung als Tenside bekannt. In DE-A 40 32 006 sind Entschäumer auf der Basis solcher Organopolysiloxane beschrieben.

Es bestand die Aufgabe, (Meth)acryloxygruppen aufweisende Organosiliciumverbindungen bereitzustellen, die in einem einfachen Verfahren mit hoher Selektivität und unter Verwendung leicht zugänglicher Ausgangsstoffe, die weniger toxisch als bisher verwendete sind, hergestellt werden können. Weiterhin bestand die Aufgabe, (Meth)acryloxygruppen aufweisende Organopolysiloxane bereitzustellen, welche bei Einwirkung von Licht rasch vernetzen, in denen sich die bei der Vernetzung eingesetzten Photosensibilisatoren gut lösen und mit denen ein größerer Umsatz als bisher bei der Vernetzung erzielt wird, d.h., der Gehalt an nicht umgesetzten (Meth)acryloxygruppen geringer als bisher ist. Es bestand weiterhin die Aufgabe, (Meth)acryloxygruppen aufweisende Organopolysiloxane bereitzustellen, die zur Herstellung von Überzügen eingesetzt werden können. Die Aufgabe wird durch die Erfindung gelöst.

Gegenstand der Erfindung sind (Meth)acryloxygruppen aufweisende Organosiliciumverbindungen mit Einheiten der Formel

$$A_aR_bSiX_cO_{\frac{4-(a+b+c)}{2}} \qquad (I),$$

wobei R gleich oder verschieden ist, einen einwertigen, gegebenenfalls halogenierten Kohlenwasserstoffrest mit 1 bis 18 Kohlenstoffatom(en) je Rest bedeutet,
X gleich oder verschieden ist, ein Chloratom oder ein Rest der Formel $-OR^1$ ist,
wobei $R^1$ einen Alkylrest mit 1 bis 8 Kohlenstoffatom(en) je Rest, der durch ein Ethersauerstoffatom substituiert sein kann, bedeutet,
a 0 oder 1,
b 0, 1, 2 oder 3,
c 0, 1, 2 oder 3
und die Summe $a+b+c \leq 4$
ist und
A ein Rest der Formel

$$\begin{array}{l} \qquad\qquad\qquad\quad O \\ \qquad\qquad\qquad\quad \| \\ HCR^4(OR^3)_zOCCR^2{=}CH_2 \\ \| \\ -CR^4(OR^3)_zOCCR^2{=}CH_2 \\ \qquad\qquad\qquad\quad \| \\ \qquad\qquad\qquad\quad O \end{array}$$

ist, wobei z 1, 2, 3 oder 4,
$R^2$ ein Wasserstoffatom oder einen Methylrest,
$R^3$ einen linearen oder verzweigten Alkylenrest mit 1 bis 6 Kohlenstoffatom(en) je Rest und
$R^4$ einen linearen oder verzweigten Alkylenrest mit 1 bis 6 Kohlenstoffatom(en) je Rest bedeutet,
mit der Maßgabe, daß mindestens ein Rest A je Molekül enthalten ist.

Gegenstand der Erfindung ist weiterhin ein Verfahren zur Herstellung von (Meth)acryloxygruppen aufweisenden Organosiliciumverbindungen, dadurch gekennzeichnet, daß Organosiliciumverbindungen (1) mit Einheiten der Formel

$$B_aR_bSiX_cO_{\frac{4-(a+b+c)}{2}} \quad (II),$$

wobei R, X, a, b und c die oben dafür angegebene Bedeutung haben und
B ein Rest der Formel

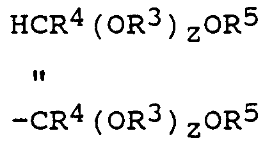

ist, wobei z, $R^3$ und $R^4$ die oben dafür angegebene Bedeutung haben und
$R^5$ ein Wasserstoffatom, eine Trimethylsilyl- oder eine Tertiärbutylgruppe bedeutet,
mit der Maßgabe, daß mindestens ein Rest B je Molekül enthalten ist,
mit (Meth)acrylsäureestern (2) der Formel

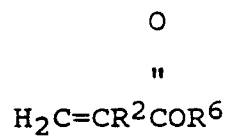

wobei $R^2$ die oben dafür angegebene Bedeutung hat und
$R^6$ einen einwertigen Kohlenwasserstoffrest mit 1 bis 12 Kohlenstoffatom(en) je Rest, der durch ein Ethersauerstoffatom oder eine Hydroxylgruppe substituiert sein kann, bedeutet,
in Gegenwart von die Umesterung fördernden Katalysatoren (3) umgesetzt werden.

Gegenstand der Erfindung ist weiterhin ein Verfahren zur Herstellung von (Meth)acryloxygruppen aufweisenden Organosiliciumverbindungen, dadurch gekennzeichnet, daß Organosiliciumverbindungen (1) mit Einheiten der Formel

$$B_aR_bSiX_cO_{\frac{4-(a+b+c)}{2}} \quad (II),$$

wobei R, X, B, a, b und c die oben dafür angegebene Bedeutung haben, mit der Maßgabe, daß mindestens ein Rest B je Molekül enthalten ist,
mit (Meth)acrylsäuren in Gegenwart von sauren Katalysatoren (4) verestert werden.

Die erfindungsgemäßen Organosiliciumverbindungen besitzen vorzugsweise ein durchschnittliches Molekulargewicht von 500 bis 1 000 000 g/mol, bevorzugt 5 000 bis 150 000 g/mol und vorzugsweise eine Viskosität von 10 bis 1 000 000 $mm^2 \cdot s^{-1}$ bei 25 °C, bevorzugt 20 bis 100 000 $mm^2 \cdot s^{-1}$ bei 25 °C.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert. Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m-und p-Chlorphenylrest.

Beispiele für Alkylreste $R^1$ sind Methyl-, Ethyl-, n-Propyl-, iso-Propyl-, 1-n-Butyl-, 2-n-Butyl-, iso-Butyl-, tert.-Butylreste. Bevorzugt sind der Methyl- und Ethylrest. Beispiele für Alkylreste $R^1$, die durch ein Ethersauerstoffatom substituiert sind, sind der Methoxyethyl- und Ethoxyethylrest.

Bevorzugt ist der Rest $R^2$ ein Wasserstoffatom.

Beispiele für Reste $R^3$ sind Alkylenreste der Formel $-CH_2-CH_2-$, $-CH_2-CH_2-CH_2-$, $-C(CH_3)HCH_2-$. Bevorzugt ist $R^3$ ein Rest der Formel $-CH_2-CH_2-$.

Beispiele für Alkylenreste $R^4$ sind solche der Formel $-CH_2-$, $-CH(CH_3)-$, $-C(CH_3)_2-$, $-C(CH_3)(C_2H_5)-$, $-(CH_2)_2-$ und $-(CH_2)_4-$, wobei der Rest der Formel $-CH_2-$ bevorzugt ist.

Beispiele für Alkylreste R gelten für Alkylreste $R^6$. Bevorzugt ist der Methyl-, Ethyl- und Butylrest.

Beispiele für Reste $R^6$, die durch ein Ethersauerstoffatom substituiert sind, sind der Methoxyethyl und der Ethoxyethylrest.

Beispiele für Reste $R^6$, die durch eine Hydroxylgruppe substituiert sind, sind der Hydroxybutyl- und Hydroxyethylrest.

Beispiele für Reste A sind solche der Formel

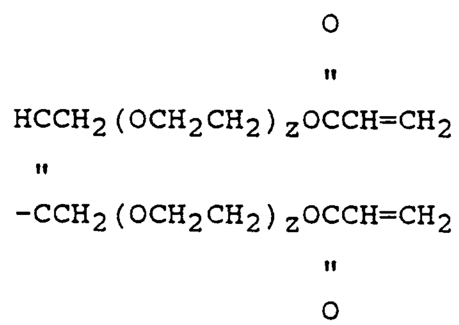

und

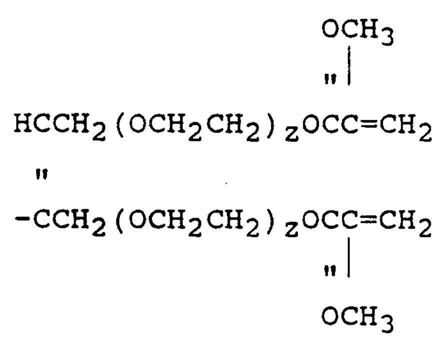

wobei z die oben dafür angegebene Bedeutung hat, bevorzugt 1 oder 2, besonders bevorzugt 1 ist.

In Formel (I) und (II) ist vorzugsweise

a durchschnittlich 0,01 bis 1,0,
b durchschnittlich 0,0 bis 3,0,
c durchschnittlich 0,0 bis 3,0 und
vorzugsweise die Summe a+b+c durchschnittlich 0,1 bis 4,0.

Vorzugsweise sind die erfindungsgemäßen Organosiliciumverbindungen Organopolysiloxane.

Bevorzugt als (Meth)acryloxygruppen aufweisende Organopolysiloxane sind solche der Formel

$$A_gR_{3-g}SiO(SiR_2O)_n(SiRAO)_mSiR_{3-g}A_g \qquad (III)$$

wobei A und R die oben dafür angegebene Bedeutung haben,
g 0 oder 1,
n 0 oder eine ganze Zahl von 1 bis 1500 und
m 0 oder eine ganze Zahl von 1 bis 100 ist,
mit der Maßgabe, daß mindestens ein Rest A je Molekül enthalten ist.

Vorzugsweise sind die bei den erfindungsgemäßen Verfahren eingesetzten Organosiliciumverbindungen (1) Organopolysiloxane. Bevorzugt werden solche der Formel

$$B_gR_{3-g}SiO(SiR_2O)_n(SiRBO)_mSiR_{3-g}B_g \qquad (IV)$$

wobei B, R, g, n und m die oben dafür angegebene Bedeutung haben, bei den erfindungsgemäßen Verfahren eingesetzt.

Beispiele für Reste B sind solche der Formel

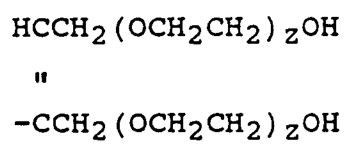

wobei z die oben dafür angegebene Bedeutung hat, bevorzugt 1 oder 2, besonders bevorzugt 1 ist.

Verfahren zur Herstellung der bei den erfindungsgemäßen Verfahren eingesetzten Organosiliciumverbindungen (1) sind in DE-A 40 32 006 und DD-A 255 737 beschrieben.
Dabei werden alkoxylierte Alkindiole (5) der allgemeinen Formel

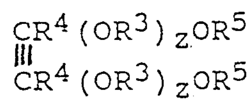

wobei $R^3$, $R^4$ und $R^5$ die oben dafür angegebene Bedeutung haben, mit Organosiliciumverbindungen (6) mit mindestens einem Si-gebundenen Wasserstoffatom je Molekül in Gegenwart von die Anlagerung von Si-gebundenen Wasserstoff an aliphatische Mehrfachbindung fördernden Katalysatoren (7) sogenannte Hydrosilylierungskatalysatoren, umgesetzt.

Bei der Hydrosilylierungsreaktion werden als Organosiliciumverbindungen (6) mit mindestens einem Si-gebundenem Wasserstoff je Molekül vorzugsweise solche der Formel

$$H_eR_fSiO_{\frac{4-(e+f)}{2}} \qquad (V)$$

worin R die oben dafür angegebene Bedeutung hat,
e 0 oder 1, durchschnittlich 0,01 bis 1,0,
f 0, 1, 2 oder 3 durchschnittlich 0,0 bis 3,0 und
die Summe e + f nicht größer als 3 ist, eingesetzt.

Bevorzugt werden als Organosiliciumverbindungen (6) Organopolysiloxane eingesetzt.
Die Organopolysiloxane (6) mit mindestens einem Si-gebundenen Wasserstoffatom enthalten vorzugsweise mindestens 0,04 Gew.-% bevorzugt 0,1 bis 1,6 Gew.-% Si-gebundenen Wasserstoff und ihre durchschnittliche Viskosität beträgt vorzugsweise 5 bis 20 000 $mm^2 \cdot s^{-1}$ bei 25 °C, bevorzugt 10 bis 2 000 $mm^2 \cdot s^{-1}$ bei 25 °C, besonders bevorzugt

10 bis 300 $mm^2 \cdot s^{-1}$ bei 25 °C.

Bevorzugt werden bei der Hydrosilylierungsreaktion als Organopolysiloxane (6) mit mindestens einem Si-gebundenen Wasserstoffatom je Molekül solche der Formel

$$H_hR_{3-h}SiO(SiR_2O)_o(SiRHO)_pSiR_{3-h}H_h \qquad (VI)$$

wobei R die oben dafür angegebene Bedeutung hat,
h 0 oder 1,
o 0 oder eine ganze Zahl von 1 bis 1500 und
p 0 oder eine ganze Zahl von 1 bis 100 ist, verwendet.

Die alkoxylierten Alkindiole (5) sind beispielsweise unter der Bezeichnung Golpanol BEO bei der Fa. BASF käuflich erwerblich und haben im Vergleich zu flüchtigen ungesättigten Alkoholen, wie Propargylalkohol oder Diolen, wie But-2-in-1,4-diol eine wesentlich geringere Toxizität.

Herstellungsbedingt, auch abhängig von dem eingesetzten alkoxylierten Alkindiol, kann z in dem Rest B durchschnittlich einen Wert zwischen 1 und 4 besitzen.

Alkoxylierte Alkindiole (5) werden bei der Hydrosilylierungsreaktion vorzugsweise in solchen Mengen eingesetzt, daß 1 bis 2 Mol, bevorzugt 1,05 bis 1,20 Mol, Alkindiol (5) je Mol Si-gebundener Wasserstoff in der Organosiliciumverbindung (6) vorliegt.

Bei der Hydrosilylierungsreaktion werden als die Anlagerung von Si-gebundenem Wasserstoff an aliphatische Mehrfachbindung fördernde Katalysatoren (7) die gleichen Katalysatoren eingesetzt, die auch bisher zur Förderung der Anlagerung von Si-gebundenem Wasserstoff an aliphatische Mehrfachbindung eingesetzt wurden. Bei den Katalysatoren handelt es sich vorzugsweise um ein Metall aus der Gruppe der Platinmetalle oder um eine Verbindung oder einen Komplex aus der Gruppe Platinmetalle. Beispiele für solche Katalysatoren sind metallisches und feinverteiltes Platin, das sich auf Trägern wie Siliciumdioxyd, Aluminiumoxyd oder Aktivkohle befinden kann, Verbindungen oder Komplexe von Platin, wie Platinhalogenide, z. B. $PtCl_4$, $H_2PtCl_6{*}6H_2O$, $Na_2PtCl_4{*}4\ H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6{*}6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gammapicolin-Platindichlorid, Cyclopentadien-Platindichlorid sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, oder Ammonium-Platinkomplexe gemäß EP-B 110 370.

Bei der Hydrosilylierungsreaktion wird der Katalysator (7) vorzugsweise in Mengen von 2 bis 200 Gew.-ppm (Gewichtsteilen je Million Gewichtsteilen), bevorzugt in Mengen von 5 bis 50 Gew.-ppm, jeweils berechnet als elementares Platin und bezogen auf das Gesamtgewicht von Alkindiol (5) und Organosiliciumverbindung (6) eingesetzt.

Beispiele für die bei dem erfindungsgemäßen Verfahren eingesetzten (Meth)acrylsäureester (2) sind Methylmethacrylat, Ethylmethacrylat, Butylmethacrylat, Methylacrylat, Ethylacrylat und Butylacrylat.

Als die Umesterung fördernde Katalysatoren (3), können auch bei dem erfindungsgemäßen Verfahren die gleichen Katalysatoren eingesetzt werden, die auch bisher zur Förderung der Umesterung eingesetzt werden konnten. Bei den Katalysatoren handelt es sich vorzugsweise um die Metalle Zinn, Titan, Aluminium und Magnesium oder um eine Verbindung oder einen Komplex aus der Gruppe dieser Metalle. Beispiel für die Umesterung fördernde Katalysatoren (3) sind Dibutylzinndichlorid, Monobutylzinntrichlorid, Dibutylzinndiacetat, Dibutylzinndilaurat, Tributylzinnmethoxid, Dibutylzinndimethoxid, Tetrabutyltitanat, Si/Al-Ester und $Mg[OC(O)CH_3]_2$. Vorzugsweise werden bei dem erfindungsgemäßen Verfahren als Schleppmittel für den flüchtigen Alkohol Kohlenwasserstoffe, wie Cyclohexan oder Toluol verwendet. Stabilisatorzusätze sind vorteilhaft; Verwendung finden vorzugsweise Radikalstopper, wie Phenothiazin, Methoxyphenol, butyliertes Hydroxytoluol, Kupfer oder Kupferverbindungen.

Bei dem erfindungsgemäßen Verfahren werden vorzugsweise pro Mol Hydroxylgruppe bzw. $OR^5$-Gruppe im Rest B der Organosiliciumverbindung (1) 0,5 - 12 Mol (Meth)acrylsäureester (2) bevorzugt 0,5 - 6 Mol (Meth)acrylsäureester (2) und besonders bevorzugt 1 - 3 Mol (Meth)acrylsäureester (2) verwendet.

Als die Veresterung fördernde saure Katalysatoren (4) können auch bei dem erfindungsgemäßen Verfahren die gleichen sauren Katalysatoren eingesetzt werden, die auch bisher zur Förderung der Veresterung eingesetzt werden konnten.

Bei den sauren Katalysatoren (4) handelt es sich vorzugsweise um Protonensäuren, wie Schwefelsäure, Chlorwasserstoff, Phosphorsäure, Trifluormethansulfonsäure, p-Toluolsulfonsäure und sogenannte saure Erden, wie Tonsil und KSF/O, die im Handel erhältlich sind.

Bei dem erfindungsgemäßen Verfahren werden vorzugsweise pro Mol Hydroxylgruppe bzw. $OR^5$-Gruppe im Rest B der Organosiliciumverbindung (1) 0,5 - 12 Mol (Meth)acrylsäure, bevorzugt 0,5 - 6 Mol (Meth)acrylsäure und besonders bevorzugt 1 - 3 Mol (Meth)acrylsäure verwendet.

Die Katalysatoren (3) und (4) werden vorzugsweise in Mengen von 0,01 bis 5 Gew.-%, bevorzugt in Mengen von 0,1 bis 2 Gew.-%, bezogen auf das Gesamtgewicht von (Meth)acrylsäure-ester (2) bzw. (Meth)acrylsäure und Organosiliciumverbindung (1) eingesetzt.

Die erfindungsgemäßen Verfahren werden vorzugsweise beim Druck der umgebenden Atmosphäre, also etwa bei 1020 hPa(abs.) durchgeführt. Sie können aber auch bei höheren oder niedrigeren Drücken durchgeführt werden.

Ferner werden die erfindungsgemäßen Verfahren vorzugsweise bei einer Temperatur von 50 °C bis 180 °C, bevorzugt 80 °C bis 150 °C durchgeführt.

Bei den erfindungsgemäßen Verfahren können inerte, organische Lösungsmittel mitverwendet werden. Beispiele für inerte organische Lösungsmittel sind Toluol, Xylol und Octanisomere.

Weiterhin können bei den erfindungsgemäßen Verfahren nicht umgeesterte Hydroxylgruppen der Organosiliciumverbindung (1) durch Carboxylierungsmittel, wie Essigsäureanhydrid und Diketen oder Vinylether unter Säurekatalyse weiter umgesetzt werden.

Von den nach den erfindungsgemäßen Verfahren hergestellten (Meth)acryloxygruppen aufweisenden Organosiliciumverbindungen wird vorzugsweise überschüssiger (Meth)acrylsäureester (2) bzw. überschüssige (Meth)acrylsäure, überschüssiges Carboxylierungsmittel sowie gegebenenfalls mitverwendetes inertes organisches Lösungsmittel, vorzugsweise destillativ, entfernt.

Die nach den erfindungsgemäßen Verfahren erhaltenen (Meth)acryloxygruppen aufweisenden Organopolysiloxane können mit Organopolysiloxanen (8), ausgewählt aus der Gruppe bestehend aus linearen, endständige, Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten, equilibriert werden.

Vorzugsweise werden als lineare, endständige Triorganosiloxygruppen aufweisende Organopolysiloxane solche der Formel

$$R_3SiO(SiR_2O)_rSiR_3$$

wobei R die oben dafür angegebene Bedeutung hat und
r 0 oder eine ganze Zahl im Wert von 1 bis 1500 ist,
als lineare, endständige Hydroxylgruppen aufweisende Organopolysiloxane solche der Formel

$$HO(SiR_2O)_sH$$

wobei R die oben dafür angegebene Bedeutung hat und
s eine ganze Zahl im Wert von 1 bis 1500 ist,
als cyclische Organopolysiloxane solche der Formel

$$(R_2SiO)_t$$

wobei R die oben dafür angegebene Bedeutung hat und
t eine ganze Zahl von 3 bis 12 ist,
und als Mischpolymerisate solche aus Einheiten der Formel

$$R_2SiO \text{ und } RSiO_{3/2}$$

wobei R die oben dafür angegebene Bedeutung hat, eingesetzt.

Die Mengenverhältnisse der bei der gegebenenfalls durchgeführten Equilibrierung eingesetzten Organopolysiloxane (8) und (Meth)acryloxygruppen aufweisenden Organopolysiloxane werden lediglich durch den gewünschten Anteil der (Meth)acrylgruppen in den bei der gegebenenfalls durchgeführten Equilibrierung erzeugten Organopolysiloxanen und durch die gewünschte mittlere Kettenlänge bestimmt.

Bei der gegebenenfalls durchgeführten Equilibrierung werden vorzugsweise saure Katalysatoren, welche die Equilibrierung fördern, eingesetzt. Beispiele für solche Katalysatoren sind Schwefelsäure, Phosphorsäure, Trifluormethansäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (= Teile je

Million), insbesondere 50 bis 200 Gew.-ppm, jeweils bezogen auf das Gesamtgewicht der eingesetzten Organosiliciumverbindungen, verwendet. Die Verwendung basischer Equilibrierungskatalysatoren ist zwar möglich, jedoch nicht bevorzugt.

Die gegebenenfalls durchgeführte Equilibrierung wird vorzugsweise bei 80 °C bis 150 °C und beim Druck der umgebenden Atmosphäre, also etwa bei 1020 hPa (abs.), durchgeführt. Falls erwünscht, können aber auch höhere oder niedrigere Drücke angewendet werden. Das Equilibrieren wird vorzugsweise in 5 bis 40 Gew.-%, bezogen auf das Gesamtgewicht der jeweils eingesetzten Organosiliciumverbindungen, in mit Wasser nicht mischbarem Lösungsmittel, wie Toluol, durchgeführt.

Vor dem Aufarbeiten des bei dem Equilibrieren erhaltenen Gemisches kann der Katalysator unwirksam gemacht werden.

Die erfindungsgemäßen Verfahren können absatzweise, halbkontinuierlich oder vollkontinuierlich durchgeführt werden.

Gegenstand der Erfindung sind weiterhin durch Bestrahlung mit Licht vernetzbare Zusammensetzungen enthaltend

(A) (Meth)acryloxygruppen aufweisende Organopolysiloxane der Formel (I) bzw. (III) und

(B) Photosensibilisatoren.

Die durch Bestrahlung mit Licht vernetzbaren Zusammensetzungen werden zur Herstellung von Überzügen verwendet.

Vorzugsweise werden die erfindungsgemäßen (Meth)acryloxygruppen aufweisenden Organopolysiloxane durch Ultraviolettlicht vernetzt, wobei solches mit Wellenlängen im Bereich von 200 bis 400 nm bevorzugt ist. Das Ultraviolettlicht kann, z. B. in Xenon-, Quecksilbernieder-, Quecksilbermittel- oder Quecksilberhochdrucklampen, erzeugt werden. Zur Vernetzung durch Licht ist auch solches mit einer Wellenlänge von 400 bis 600 nm, also sogenanntes "Halogenlicht", geeignet.

Bei den zur Vernetzung der erfindungsgemäßen Organopolysiloxanen geeigneten Energiequellen kann es sich aber auch um Röntgen-, Gamma- oder Elektronenstrahlen oder um gleichzeitige Anwendung von mindestens zwei verschiedenen Arten solcher Strahlen handeln. Zusätzlich zu der energiereichen Strahlung kann Wärmezufuhr, einschließlich Wärmezufuhr mittels Infrarotlicht, angewendet werden. Eine solche Wärmezufuhr ist jedoch keineswegs erforderlich und vorzugsweise unterbleibt sie, um den Aufwand für Energie zu verringern.

Geeignete Photosensibilisatoren sind gegebenenfalls substituierte Acetophenone, Propiophenone, Benzophenone, Anthrachinone, Benzile, Carbazole, Xanthone, Thioxanthone, Fluorene, Fluorenone, Benzoine, Naphthalinsulfonsäuren, Benzaldehyde und Zimtsäuren.

Beispiele hierfür sind Fluorenon, Fluoren, Carbazol; Acetophenon; substituierte Acetophenone, wie 3-Methylacetophenon, 2,2'-Dimethoxy-2-phenylacetophenon, 4-Methylacetophenon, 3-Bromacetophenon, 4-Allylacetophenon, p-Diacetylbenzol, p-tert.-Butyltrichloracetophenon; Propiophenon; substituierte Propiophenone, wie 1-[4-(Methylthio)phenyl]-2-morpholinpropanon-1; Benzophenon; substituierte Benzophenone, wie Michlers Keton, 3-Methoxybenzophenon, 4,4'-Dimethylaminobenzophenon, 4-Methylbenzophenon, 4-Chlorbenzophenon, 4,4'-Dimethoxybenzophenon, 4-Chlor-4'-benzylbenzophenon; Xanthon; substituierte Xanthone, wie 3-Chlorxanthon, 3,9-Dichlorxanthon, 3-Chlor-8-nonylxanthon; Thioxanthon; substituierte Thioxanthone, wie Isopropylthioxanthon; Anthrachinon; substituierte Anthrachinone, wie Chloranthrachinon und Anthrachino-1,5-disulfonsäuredinatriumsalz; Benzoin; substituierte Benzoine, wie Benzoinmethylether; Benzil; 2-Naphthalinsulfonylchlorid; Benzaldehyd; Zimtsäure.

Photosensibilisatoren sind in den erfindungsgemäßen Zusammensetzungen vorzugsweise in Mengen von 0,01 bis 10 Gew.-%, insbesondere von 0,5 bis 5 Gewichtsprozent, jeweils bezogen auf das Gesamtgewicht der zu vernetzenden Organopolysiloxane, eingesetzt.

Beispiele für Oberflächen, auf welche die erfindungsgemäßen Überzüge aufgebracht werden können, sind diejenigen von Papier, Holz, Kork, Kunststoffolien, z. B. Polyethylenfolien oder Polypropylenfolien, keramischen Gegenständen, Glas, einschließlich Glasfasern, Metallen, Pappen, einschließlich solcher aus Asbest, und von gewebtem und ungewebtem Tuch aus natürlichen oder synthetischen organischen Fasern. Anwendung finden die erfindungsgemäßen Überzüge beispielsweise in der Trennpapierbeschichtung.

Das Auftragen der erfindungsgemäßen durch Bestrahlung mit Licht vernetzbaren Zusammensetzungen auf die zu überziehenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravurüberzugsvorrichtung, Messer- oder Rakelbeschichtung.

Alle Umesterungsreaktionen bzw. Veresterungsreaktionen (Beispiele 1b, 2b, 3b, 4b, 5b, 6b und 7) werden unter Zugabe von 100 ppm Phenothiazin, bezogen auf Gesamtmasse der Edukte, durchgeführt.

Beispiel 1:

a) 125 g (0,63 mol C≡C-Dreifachbindung) eines ethoxylierten 2-Butindiols (käuflich erwerblich unter dem Handelsnamen "Golpanol BEO" bei der Fa. BASF) und 63,6 g (0,55 mol) n-Butylacetat werden unter Stickstoffatmosphäre auf 80 °C erwärmt. Anschließend dosiert man 716 µl einer 1-Gew.-prozentigen (bezogen auf reines Platin ) toluolischen Lösung eines Divinyltetramethyldisiloxanplatinkomplexes mit Platin in der Oxidationsstufe Null zu, so daß der Platingehalt 20 ppm, bezogen auf reines Metall, beträgt, und erhitzt auf 125 °C. Innerhalb von 2,5 Stunden werden 186,7 g (0,34 Gew-% Wasserstoff) eines α,ω-Dihydrogenpolydimethylsiloxanes mit einer Viskosität von 3,5 $mm^2 \cdot s^{-1}$ bei 25 °C zugetropft. Nach weiteren 2 Stunden Reaktionszeit wird die Reaktionslösung filtriert und am Rotationsverdampfer bei 100 °C im Hochvakuum bis zur Gewichtskonstanz eingeengt.

Man erhält 268 g (86 % d. Th.) eines rotbraunen, klaren Öles (VS I).

b) 25 g VS I, dessen Herstellung oben unter a) beschrieben ist, 9,68 g (0,112 mol) Acrylsäuremethylester, 0,139 g ($0,396 \times 10^{-3}$ mol) Dibutylzinndiacetat und 10 g (0,109 mol) Toluol werden bei Raumtemperatur unter Stickstoff vorgelegt und dann auf 95 °C erwärmt. Die Temperatur wird 30 Minuten beibehalten und anschließend mit einer Heizrate von 1 °C pro 10 Minuten erhöht. Das Methanol/Toluol-Azeotrop destilliert bei 63,8 °C ab. Nach 5 Stunden Reaktionszeit wird die Reaktionslösung filtriert und im Hochvakuum bei 90 °C bis zur Gewichtskonstanz eingeengt.

Man erhält 27,22 g (81,2 % d. Th.) eines klaren, orangebraunen Öles (AC I).

Beispiel 2:

a) 15 g (0,076 mol C≡C-Dreifachbindung) "Golpanol BEO" und 35,4 g (0,3 mol) n-Butylacetat werden unter Stickstoffatmosphäre auf 80 °C erwärmt. Anschließend dosiert man 399 µl des im Beispiel 1 beschriebenen Platinkatalysators (20 ppm Pt) zu und erhitzt auf 125 °C. Innerhalb von 3 Stunden werden 158,7 g (0,048 Gew.-% Wasserstoff) eines α,ω-Dihydrogenpolydimethylsiloxanes der Viskosität 69 $mm^2 \cdot s^{-1}$ bei 25 °C zugetropft. Nach einer weiteren Stunde Rührzeit wird die Reaktionslösung filtriert und am Rotationsverdampfer bei 100 °C im Hochvakuum bis zur Gewichtskonstanz eingeengt.

Man erhält 136,8 g (78,8 % d. Th.) eines hellgelben, opaleszierenden Öles (VS II).

b) 25 g VS II, dessen Herstellung oben unter a) beschrieben ist, 23,77 g (0,276 mol) Acrylsäuremethylester, 0,201 g ($0,318 \times 10^{-3}$ mol) Dibutylzinndilaurat und 10 g (0,1085 mol) Toluol werden bei Raumtemperatur unter Stickstoffatmosphäre vorgelegt und dann auf 85 °C erhitzt. Die Temperatur wird 30 Minuten beibehalten und anschließend mit einer Heizrate von 1 °C pro 10 Minuten erhöht. Das Methanol/Toluol-Azeotrop destilliert bei 63,8 °C ab. Nach 5 Stunden Reaktionszeit wird die Reaktionslösung filtriert und im Hochvakuum bei 80 °C bis zur Gewichtskonstanz eingeengt. Man erhält 25,84 g (78,49 % d. Th.) eines orangen Öles (AC II).

Beispiel 3:

a) 90 g (0,45 mol C≡C-Dreifachbindung) "Golpanol BEO" und 65 g (0,56 mol) n-Butylacetat werden unter Stickstoffatmosphäre auf 80 °C erwärmt. Anschließend dosiert man 732 µl (20 ppm Pt) des in Beispiel 1 beschriebenen Platinkatalysators zu und erhitzt auf 125 °C. Innerhalb von 2,5 Stunden werden 228,5 g (0,20 Gew.-% Wasserstoff) eines α,ω-Dihydrogenpolydimethylsiloxanes der Viskosität 6,6 $mm^2 \cdot s^{-1}$ bei 25 °C zugetropft. Nach einer weiteren Stunde Reaktionszeit wird die Reaktionslösung filtriert und am Rotationsverdampfer bei 100 °C im Hochvakuum bis zur Gewichtskonstanz eingeengt.

Man erhält 251,8 g (79,1 % d. Th.) eines gelben, klaren Öles (VS III).

b) 25 g VS III, dessen Herstellung oben unter a) beschrieben ist, 5,48 g (0,043 mol) Acrylsäurebutylester, 0,122 g ($0,348 \times 10^{-3}$ mol) Dibutylzinnacetat und 10 g (0,109 mol) Toluol werden bei Raumtemperatur unter Stickstoffatmosphäre vorgelegt und dann auf 110 °C aufgeheizt. Die Temperatur wird 30 Minuten beibehalten und anschließend mit einer Heizrate von 1 °C pro Minute erhöht. Das Butanol/Toluol-Azeotrop destilliert bei 105,5 °C ab. Nach 5 Stunden Reaktionszeit wird die Reaktionslösung filtriert und im Hochvakuum bei 80 °C bis zur Gewichtskonstanz eingeengt. Man erhält 26,04 g (90,92 % d. Th.) eines orangen Öles (AC III).

Beispiel 4:

a) 70 g (0,35 mol C≡C-Dreifachbindung) "Golpanol BEO" und 66,1 g (0,57 mol) n-Butylacetat werden unter Stickstoffatmosphäre auf 80 °C erwärmt. Anschließend gibt man 744 µl (20 ppm Pt) des in Beispiel 1 beschriebenen Platinkatalysators zu und erhitzt auf 125 °C. Innerhalb von 2,5 Stunden werden 253,8 g (0,14 Gew.-% Wasserstoff) eines Equilibrates aus Dimethylsiloxy-, Methylhydrogensiloxy- und Trimethlysiloxyeinheiten der Viskosität von 73 $mm^2 \cdot s^{-1}$ bei 25 °C zudosiert. Nach 10 Stunden Reaktionszeit wird die Reaktionslösung filtriert und am Rotationsverdampfer bei 100 °C im Hochvakuum bis zur Gewichtskonstanz eingeengt.

Man erhält 224,5 g (69,3 % d. Th.) eines gelben, klaren Öles (VS IV).

b) 25 g VS IV, dessen Herstellung oben unter a) beschrieben ist, 20,83 g (0,242 mol) Acrylsäuremethylester, 0,367 g (0,108 x $10^{-2}$ mol) Tetrabutylorthotitanat und 10 g (0,109 mol) Toluol werden bei Raumtemperatur unter Stickstoffatmosphäre vorgelegt und dann auf 87 °C erhitzt. Die Temperatur wird 30 Minuten beibehalten und anschließend mit einer Heizrate von 1 °C pro 10 Minuten erhöht. Das Methanol/Toluol-Azeotrop destilliert bei 63,8 °C ab. Nach 5 Stunden Reaktionszeit wird die Reaktionslösung filtriert und im Hochvakuum bei 80 °C bis zur Gewichtskonstanz eingeengt.

Man erhält 24,92 g (78,0 % d. Th.) eines orangen Öles (AC IV).

Beispiel 5:

a) 27,3 g (0,138 mol C≡C-Dreifachbindung) "Golpanol BEO" und 65,8 g (0,57 mol) n-Butylacetat werden unter Stickstoffatmosphäre auf 80 °C erwärmt. Anschließend dosiert man 739 µl (20 ppm Pt) des in Beispiel 1 beschriebenen Platinkatalysators zu und erwärmt auf 125 °C. Innerhalb von 3 Stunden werden 294,7 g (0,047 Gew.-% Wasserstoff) eines Equilibrates aus Dimethylsiloxy-, Methylhydrogensiloxy- und Trimethylsiloxyeinheiten der Viskosität 110 $mm^2/s$ bei 25 °C zugetropft. Nach 1 Stunde Reaktionszeit wird die Reaktionslösung filtriert und am Rotationsverdampfer bei 100 °C im Hochvakuum bis zur Gewichtskonstanz eingeengt.

Man erhält 260,4 g (80,9 % d. Th.) eines hellgelben, klaren Öles (VS V).

b) 25 g VS V, dessen Herstellung oben unter a) beschrieben ist, 10,54 g (0,123 mol) Acrylsäuremethylester, 0,142 g (0,405 x $10^{-3}$ mol) Dibutylzinndiacetat und 10 g (0,109 mol) Toluol werden bei Raumtemperatur unter Stickstoffatmosphäre vorgelegt und dann auf 90 °C erhitzt. Die Temperatur wird 30 Minuten beibehalten und anschließend mit einer Heizrate von 1 °C pro 10 Minuten erhöht. Das Methanol/Toluol-Azeotrop destilliert bei 63,8 °C ab. Nach 4 Stunden Reaktionszeit wird die Reaktionslösung filtriert und im Hochvakuum bei 80 °C bis zur Gewichstkonstanz eingeengt. Man erhält 26,52 g (93 % d. Th.) eines hellgelben Öles (AC V).

Beispiel 6:

a) 70 g (0,35 mol C≡C-Dreifachbindung) "Golpanol BEO" und 58,2 g (0,5 mol) n-Butylacetat werden unter Stickstoffatmosphäre auf 80 °C erwärmt. Anschließend dosiert man 656 µl (20 ppm Pt) des in Beispiel 1 beschriebenen Platinkatalysators zu und erwärmt auf 125 °C. Innerhalb von 3 Stunden werden 215,4 g (0,165 Gew.-% Wasserstoff) eines Equilibrates aus Dimethylsiloxy-, Methylhydrogensiloxy- und Dimethylhydrogensiloxyeinheiten der Viskosität 148 $mm^2 \cdot s^{-1}$ bei 25 °C zugetropft. Nach 2 Stunden Reaktionszeit wird die Reaktionslösung filtriert und am Rotationsverdampfer bei 100 °C im Hochvakuum bis zur Gewichtskonstanz eingeengt.

Man erhält 194 g (68 % d. Th.) eines gelben, klaren Öles (VS VI).

b) 25 g VS VI, dessen Herstellung oben unter a) beschrieben ist, 27,28 g (0,272 mol) Acrylsäureethylester, 0,21 g (0,596 x $10^{-3}$ mol) Dibutylzinndiacetat und 15 g (0,163 mol) Toluol werden bei Raumtemperatur unter Stickstoffatmosphäre vorgelegt und dann auf 102 °C erwärmt. Die Temperatur wird 30 Minuten beibehalten und anschließend mit einer Heizrate von 1 °C pro 15 Minuten erhöht. Das Ethanol/Toluol-Azeotrop destilliert bei 76,8 °C ab. Nach 4 Stunden Reaktionszeit wird die Reaktionslösung filtriert und im Hochvakuum bei 80 °C bis zur Gewichtskonstanz eingeengt. Man erhält 31,3 g (91,8 % d. Th.) eines orangen Öles (AC VI).

Beispiel 7:

25 g VS III, dessen Herstellung in Beispiel 3a) beschrieben ist, 1,254 g (0,0174 mol) Acrylsäure, 0,0054 g (0,245 x $10^{-4}$ mol) Butylhydroxytoluol, 0,5 g einer säureaktivierten Bleicherde unter dem Handelsnamen KSF/O erhältlich und 8,7 g (0,0944 mol) Toluol werden bei Raumtemperatur unter Einleiten von Stickstoff vorgelegt und dann auf 115 °C erwärmt. Der Ansatz wird 2 Stunden bei 115 °C gerührt, wobei nach 1 Stunde nochmals 0,5 g KSF/O zugesetzt wird. Das Wasser/Toluol-Azeotrop wird mit dem Stickstoffstrom ausgetrieben. Nach vollendeter Reaktionszeit wird die Reaktionslösung filtriert und im Hochvakuum bei 80 °C bis zur Gewichtskonstanz eingeengt.

Man erhält 20,22 g (78,26 % d. Th.) eines orangen Öles.

Beispiel 8:

10 g AC V, dessen Herstellung in Beispiel 5b) beschrieben ist und 0,012 g (0,94 x $10^{-4}$ mol) Dimethylaminopyridin werden unter Stickstoffatmosphäre bei 50 °C vorgelegt. Dazu tropft man 1,97 g (0,0234 mol) Diketen und 10 g (0,1085 mol) Toluol langsam zu. Anschließend rührt man 1 Stunde bei 65 °C, filtriert und engt die Reaktionslösung im Hochvakuum bei 80 °C bis zur Gewichtskonstanz ein.

Man erhält 11,03 g (92,1 % d. Th.) eines rötlichen, klaren Öles.

Beispiel 9:

2 g AC I, dessen Herstellung in Beispiel 1b) beschrieben ist, wird mit 0,06 g (3,65 x $10^{-4}$ mol) des Photosensibilisators mit dem Handelsnamen Darocur$^R$ 1173 (käuflich erwerblich bei der Fa. Ciba-Geigy) gemischt und mit einem Rakel in 20 µm Schichtdicke auf eine Polyethylenfolie aufgetragen. Durch Bestrahlung mit einer Quecksilbermitteldrucklampe mit einer Leistung von 80 mW/cm$^2$ im Abstand von 10 cm unter Stickstoffatmosphäre wird das Polymer in 2 Sekunden vernetzt. Die Oberfläche des Überzuges ist klebfrei.

Beispiel 10:

2 g AC IV, dessen Herstellung in Beispiel 4b) beschrieben ist, wird mit 0,06 g (2,0 x $10^{-4}$ mol) des Photosensibilisators mit dem Handelsnamen Irgacure$^R$ 369 (käuflich erwerblich bei der Fa. Ciba-Geigy) in 0,5 g Toluol gemischt und mit einem Rakel in 20 µm Schichtdicke auf ein Papier mit dem Handelsnamen Bosso Buxil aufgetragen. Durch Bestrahlung mit einer Quecksilbermitteldrucklampe mit einer Leistung von 80 mW/cm$^2$ im Abstand von 10 cm unter Stickstoffatmosphäre wird das Polymer in 4 Sekunden vernetzt. Die Oberfläche des Überzuges ist klebfrei.

Beispiel 11:

2 g AC VI, dessen Herstellung in Beispiel 6b) beschrieben ist, wird mit 0,06 g (3,65 x $10^{-4}$ mol) des Photsensibilisators mit dem Handelsnamen Darocur® 1173 gemischt und mit einem Rakel in 2 µm Schichtdicke auf eine Polypropylenfolie aufgetragen. Durch Bestrahlung mit einer Quecksilbermitteldrucklampe mit einer Leistung von 80 mW/cm$^2$ in Abstand von 10 cm unter Stickstoffatmosphäre wird das Polymer in 2 Sekunden vernetzt. Die Oberfläche des Überzuges ist klebfrei.

Beispiel 12

25g VS I, dessen Herstellung in Beispiel 1a) beschrieben ist, 25,62g (0,2976 mol) Acrylsäuremethylester, 0,405 g (0,1154 • $10^{-2}$ mol; entspr. 0,8 Gew.-% auf Gesamtansatz) Dibutylzinnacetat und 10 g (0,109 mol) Toluol werden bei Raumtemperatur unter Stickstoffatmosphäre vorgelegt und gemeinsam auf 90°C erhitzt. Die Temperatur wird 30 Minuten beibehalten, dann wird die Temperatur mit einer Heizrate von 1°C pro 10 Minuten auf 100°C und anschließend mit einer Heizrate von 1°C pro 3,75 Minuten auf 140°C erhöht. Das Methanol/Toluol-Azeotrop destilliert bei 63,8°C ab. Nach 4 Stunden Reaktionszeit wird im Hochvakuum bei 80°C bis zur Gewichtskonstanz eingeengt.
Man erhält 28,22g (92,95% d. Th.) eines klaren, braunen Öles der Struktur

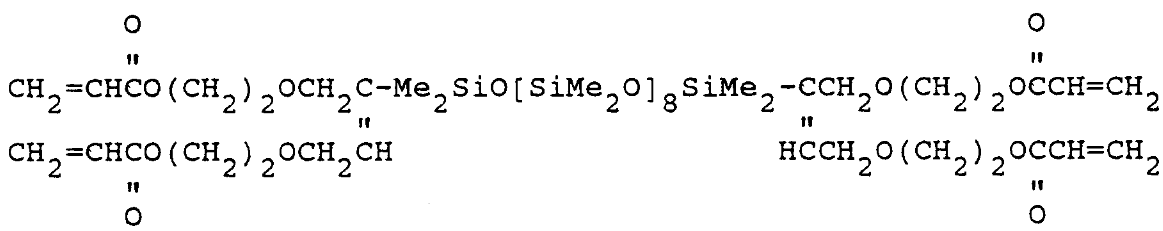

(Me = Methylgruppe)

mit 52 Prozent Acrylsäureestergruppen, bezogen auf die ursprünglichen Hydroxygruppen.

Vergleichsversuch 1 (DD-A 298 404)

a) 360 g (4,2 mol) 2-Butin-1,4-diol und 80 g (0,68 mol) n-Butylacetat werden unter Stickstoffatmosphäre auf 60°C erwärmt. Anschließend dosiert man 0,075 g des im Beispiel 1 beschriebenen Platin-Katalysators zu, so daß der Platingehalt 10 ppm, bezogen auf reines Metall, beträgt. Innerhalb von 1,25 Stunden werden dann 1290 g (0,31 Gew.-% Wasserstoff) eines α,ω-Dihydrogenpolydimethylsiloxanes mit einer Viskosität von 4,5mm$^2$/s bei 25°C zugetropft. Nach einer weiteren Stunde Reaktionszeit wird am Rotationsverdampfer bei 80°C im Hochvakuum bis zur Gewichtskonstanz eingeengt.
Man erhält 1586 g (96,1% d. Th.) eines gelben klaren Öles (VS VII) der Viskosität 300 mm$^2$/s bei 25°C.

b) 25g VS VII, dessen Herstellung oben unter a) beschrieben ist, 34,03g (0,3953 mol) Acrylsäuremethylester, 0,472 g ($0{,}1345 \cdot 10^{-2}$ mol; entspr. 0,8 Gew.-% auf Gesamtansatz) Dibutylzinnacetat und 10 g (0,109 mol) Toluol werden bei Raumtemperatur unter Stickstoffatmosphäre vorgelegt und gemeinsam auf 90°C erhitzt. Die Temperatur wird 30 Minuten beibehalten, dann wird die Temperatur mit einer Heizrate von 1°C pro 10 Minuten auf 100°C und anschließend mit einer Heizrate von 1°C pro 3,75 Minuten auf 140°C erhöht. Das Methanol/Toluol-Azeotrop destilliert bei 63,8°C ab. Nach 4 Stunden Reaktionszeit wird im Hochvakuum bei 80°C bis zur Gewichtskonstanz eingeengt.
Man erhält 28,15g (87,61% d. Th.) eines klaren, orangen Öles, der Struktur

```
          O                                     O
          ||                                    ||
CH2=CHCOCH2C-Me2SiO[SiMe2O]8SiMe2-CCH2OCCH=CH2
            ||                        ||
CH2=CHCOCH2CH                        HCCH  OCCH=CH
          ||                                    ||
          O                                     O
(Me = Methylgruppe)
```

mit 42 Prozent Acrylsäureestergruppen, bezogen auf die ursprünglichen Hydroxygruppen (AC VII).
Im Vergleich zu Beispiel 12 wird bei der Herstellung ein geringerer Umsatz an Acrylsäureestergruppen erzielt.

Beispiel 13:

25g VS I, dessen Herstellung in Beispiel 1a) beschrieben ist, 25,62g (0,2976 mol) Acrylsäuremethylester, 0,304 g ($0{,}866 \cdot 10^{-3}$ mol) Dibutylzinnacetat und 10 g (0,109 mol) Toluol werden bei Raumtemperatur unter Stickstoffatmosphäre vorgelegt und gemeinsam auf 90°C erhitzt. Die Temperatur wird 30 Minuten beibehalten, dann wird die Temperatur mit einer Heizrate von 1°C pro 10 Minuten auf 100°C und anschließend mit einer Heizrate von 1°C pro 3,75 Minuten auf 140°C erhöht. Das Methanol/Toluol-Azeotrop destilliert bei 63,8°C ab. Nach 4 Stunden Reaktionszeit wird im Hochvakuum bei 80°C bis zur Gewichtskonstanz eingeengt.
Man erhält 27,26 g (89,8% d. Th.) eines klaren, braunen Öles der Struktur

```
    O                                                     O
    ||                                                    ||
CH2=CHCO(CH2)2OCH2C-Me2SiO[SiMe2O]8SiMe2-CCH2O(CH2)2OCCH=CH2
                   ||                     ||
CH2=CHCO(CH2)2OCH2CH                     HCCH2O(CH2)2OCCH=CH2
    ||                                                    ||
    O                                                     O

(Me = Methylgruppe)
```

mit 42 Prozent Acrylsäureestergruppen, bezogen auf die ursprünglichen Hydroxygruppen (AC VIII)

Beispiel 14:

AC VIII, dessen Herstellung in Beispiel 13 beschrieben ist, wird mit 3 Gew.-% Darocure 1173 versetzt und mit einer DPA 7 von Perkin-Elmer unter Stickstoffatmosphäre, bei 25°C und einer Lichtleistung von $150 mW/cm^2$ vermessen. Es wird für AC VIII eine Reaktionsenthalpie von -70 J/g erhalten.

Vergleichsversuch 2 (DD-A 298 404)

Die Arbeitsweise von Beispiel 14 wird wiederholt mit der Abänderung, daß AC VII, dessen Herstellung in Vergleichsversuch 1b) beschrieben ist, anstelle von AC VIII eingesetzt wird.

Es wird für AC VII eine Reaktionsenthalpie von -65 J/g erhalten, d.h., im Vergleich zu Beispiel 14 reagieren weniger Acrylatgruppen ab und der Umsatz bei der Vernetzung ist daher geringer.

Beispiel 15:

AC VIII, dessen Herstellung in Beispiel 13 beschrieben ist, wird mit 20 Gew.-% eines Gemisches aus 80 Teilen Darocure 1173 und 20 Teilen Irgacure 369 versetzt und gerührt, wobei die AC VIII-Mischung klar bleibt.

Vergleichsversuch 3

Die Arbeitsweise von Beispiel 15 wird wiederholt mit der Abänderung, daß AC VII, dessen Herstellung in Vergleichsversuch 1b) beschrieben ist, anstelle von AC VIII eingesetzt wird.

Die AC VII-Mischung wird innerhalb weniger Minuten trüb. Im Vergleich zu Beispiel 15 lösen sich die Photosensibilisatoren im Polymer nicht gut.

Beispiel 16:

25g VS I, dessen Herstellung in Beispiel 1a) beschrieben ist, 25,62g (0,2976 mol) Acrylsäuremethylester, 3,59 g (0,01055 mol) Tetrabutylorthotitanat und 10g (0,109 mol) Toluol werden bei Raumtemperatur unter Stickstoffatmosphäre vorgelegt und gemeinsam auf 90°C erhitzt. Die Temperatur wird 30 Minuten beibehalten, dann wird die Temperatur mit einer Heizrate von 1°C pro 10 Minuten auf 100°C und anschließend mit einer Heizrate von 1°C pro 3,75 Minuten auf 140°C erhöht. Das Methanol/Toluol-Azeotrop destilliert bei 63,8°C ab. Nach 4 Stunden Reaktionszeit wird im Hochvakuum bei 80°C bis zur Gewichtskonstanz eingeengt.

Man erhält 30,04g (98,9% d. Th.) eines klaren, braunen Öles mit 89,4 Prozent Acrylsäureestergruppen, bezogen auf die ursprünglichen Hydroxygruppen .

5 g des Produktes werden mit 0,211g ($0,2103 \cdot 10^{-2}$mol) Butylvinylether, 146,38 µl (25 ppm) para-Toluolsulfonsäure (0,1%ig in Tetrahydrofuran) und 5 g (0,0693mol) Tetrahydrofuran bei Raumtemperatur unter Stickstoffatmosphäre vorgelegt und dann 45 Minuten bei 40°C gerührt. Anschließend wird die Lösung im Hochvakuum bei 80°C bis zur Gewichtskonstanz eingeengt.

Man erhält 4,88g (97,6 %d.Th.) eines klaren, braunen Öles.

**Patentansprüche**

1. (Meth)acryloxygruppen aufweisende Organosiliciumverbindungen mit Einheiten der Formel

$$A_aR_bSiX_cO_{\frac{4-(a+b+c)}{2}} \quad (I),$$

wobei R gleich oder verschieden ist, einen einwertigen, gegebenenfalls halogenierten Kohlenwasserstoffrest mit 1 bis 18 Kohlenstoffatom(en) je Rest bedeutet,
X gleich oder verschieden ist, ein Chloratom oder ein Rest der Formel $-OR^1$ ist,
wobei $R^1$ einen Alkylrest mit 1 bis 8 Kohlenstoffatom(en) je Rest, der durch ein Ethersauerstoffatom substituiert sein kann, bedeutet,
a 0 oder 1,
b 0, 1, 2 oder 3,
c 0, 1, 2 oder 3
und die Summe $a+b+c \leq 4$ ist und
A ein Rest der Formel

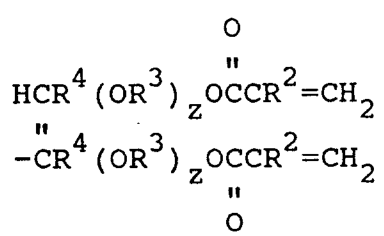

ist, wobei z 1, 2, 3 oder 4,
$R^2$ ein Wasserstoffatom oder einen Methylrest,
$R^3$ einen linearen oder verzweigten Alkylenrest mit 1 bis 6 Kohlenstoffatom(en) je Rest und
$R^4$ einen linearen oder verzweigten Alkylenrest mit 1 bis 6 Kohlenstoffatom(en) je Rest bedeutet,
mit der Maßgabe, daß mindestens ein Rest A je Molekül enthalten ist.

**2.** (Meth)acryloxygruppen aufweisende Organosiliciumverbindungen nach Anspruch 1, dadurch gekennzeichnet, daß es Organopolysiloxane der Formel

$$A_gR_{3-g}SiO(SiR_2O)_n(SiRAO)_mSiR_{3-g}A_g \qquad \text{(III)}$$

sind, wobei R und A die gleichen Bedeutungen wie in Anspruch 1 haben,
g 0 oder 1,
n 0 oder eine ganze Zahl von 1 bis 1500 und
m 0 oder eine ganze Zahl von 1 bis 100 bedeutet,
mit der Maßgabe, daß mindestens ein Rest A je Molekül enthalten ist.

**3.** (Meth)acryloxygruppen aufweisende Organosiliciumverbindungen nach Anspruch 1 oder 2, dadurch gekennzeichnet, daß A ein Rest der Formel

$$\overset{}{HCCH_2OCH_2CH_2O\overset{O}{\overset{\|}{C}}CR^2{=}CH_2}$$
$$\overset{\|}{-C}CH_2OCH_2CH_2O\underset{O}{\underset{\|}{C}}CR^2{=}CH_2$$

ist, wobei $R^2$ ein Wasserstoffatom oder einen Methylrest bedeutet.

**4.** Verfahren zur Herstellung von (Meth)acryloxygruppen aufweisenden Organosiliciumverbindungen nach Anspruch 1, 2 oder 3, dadurch gekennzeichnet, daß Organosiliciumverbindungen (1) mit Einheiten der Formel

$$B_aR_bSiX_cO_{\frac{4-(a+b+c)}{2}} \qquad \text{(II)},$$

wobei R, X, a, b und c die gleiche Bedeutung wie in Anspruch 1 haben, und
B ein Rest der Formel

$$HCR^4(OR^3)_zOR^5$$
$$\overset{\|}{-C}R^4(OR^3)_zOR^5$$

ist, wobei z, $R^3$ und $R^4$ die gleiche Bedeutung wie in Anspruch 1 haben, und
$R^5$ ein Wasserstoffatom, eine Trimethylsilyl- oder eine Tertiärbutylgruppe bedeutet,
mit der Maßgabe, daß mindestens ein Rest B je Molekül enthalten ist,
mit (Meth)acrylsäureestern (2) der Formel

$$H_2C=CR^2\overset{\overset{O}{\|}}{C}OR^6$$

wobei $R^2$ die gleiche Bedeutung wie in Anspruch 1 hat, und
$R^6$ einen einwertigen Kohlenwasserstoffrest mit 1 bis 12 Kohlenstoffatom(en) je Rest, der durch ein Ethersauerstoffatom oder eine Hydroxylgruppe substituiert sein kann, bedeutet,
in Gegenwart von die Umesterung fördernden Katalysatoren (3) umgesetzt werden.

**5.** Verfahren zur Herstellung von (Meth)acryloxygruppen aufweisenden Organosiliciumverbindungen nach Anspruch 1, 2 oder 3, dadurch gekennzeichnet, daß Organosiliciumverbindungen (1) mit Einheiten der Formel

$$B_aR_bSiX_cO_{\frac{4-(a+b+c)}{2}} \quad (II),$$

wobei R, X, a, b und c die gleichen Bedeutungen wie in Anspruch 1 haben, und
B die gleiche Bedeutung wie in Anspruch 4 hat, mit der Maßgabe, daß mindestens ein Rest B je Molekül enthalten ist,
mit (Meth)acrylsäuren in Gegenwart von sauren Katalysatoren (4) verestert werden.

**6.** Verfahren nach Anspruch 4 oder 5, dadurch gekennzeichnet, daß die so erhaltenen (Meth)acryloxygruppen aufweisenden Organopolysiloxane mit Carboxylierungsmittel oder mit Vinylethern unter säurekatalyse umgesetzt werden.

**7.** Durch Bestrahlung mit Licht vernetzbare Zusammensetzungen enthaltend

(A) (Meth)acryloxygruppen aufweisende Organopolysiloxane gemäß Anspruch 1, 2 oder 3 und
(B) Photosensibilisatoren.

**8.** Verwendung der Zusammensetzungen nach Anspruch 7 zur Herstellung von Überzügen.

## Claims

**1.** Organosilicon compounds containing (meth)acryloxy groups with units of the formula

$$A_aR_bSiX_cO_{\frac{4-(a+b+c)}{2}} \quad (I),$$

in which R is identical or different and is a monovalent, optionally halogenated hydrocarbon radical having 1 to 18 carbon atom(s) per radical,
X is identical or different and is a chlorine atom or a radical of the formula $-OR^1$,
in which $R^1$ is an alkyl radical having 1 to 8 carbon atom(s) per radical, which can be substituted by an ether oxygen atom,
a is 0 or 1
b is 0, 1, 2 or 3,
c is 0, 1, 2 or 3
and the sum a+b+c is $\leq 4$
and
A is a radical of the formula

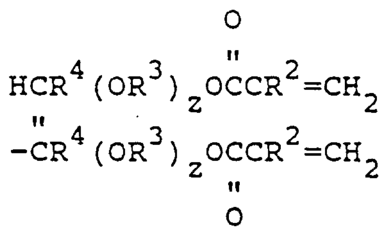

in which z is 1, 2, 3 or 4
$R^2$ is a hydrogen atom or a methyl radical,
$R^3$ is a linear or branched alkylene radical having 1 to 6 carbon atom(s) per radical and
$R^4$ is a linear or branched alkylene radical having 1 to 6 carbon atom(s) per radical,
with the proviso that the compounds contain at least one radical A per molecule.

**2.** Organosilicon compounds containing (meth)acryloxy groups according to Claim 1, characterized in that they are organopolysiloxanes of the formula

$$A_gR_{3-g}SiO(SiR_2O)_n(SiRAO)_mSiR_{3-g}A_g \qquad (III)$$

in which R and A have the same meanings as in Claim 1,
g is 0 or 1
n is 0 or an integer from 1 to 1500 and
m is 0 or an integer from 1 to 100,
with the proviso that the compounds contain at least one radical A per molecule.

**3.** Organosilicon compounds containing (meth)acryloxy groups according to Claim 1 or 2, characterized in that A is a radical of the formula

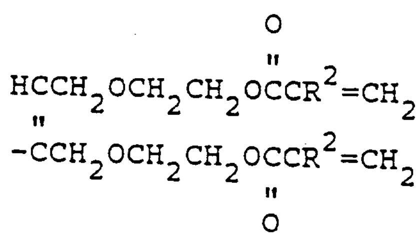

in which $R^2$ is a hydrogen atom or a methyl radical.

**4.** Process for the preparation of organosilicon compounds containing (meth)acryloxy groups according to Claim 1, 2 or 3, characterized in that organosilicon compounds (1) with units of the formula

$$B_aR_bSiX_cO_{\frac{4-(a+b+c)}{2}} \qquad (II),$$

in which R, X, a, b and c have the same meaning as in Claim 1, and
B is a radical of the formula

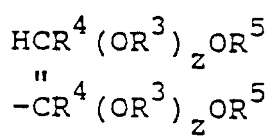

in which z, $R^3$ and $R^4$ have the same meaning as in Claim 1, and
$R^5$ is a hydrogen atom, a trimethylsilyl group or a tertiary butyl group,
with the proviso that the compounds contain at least one radical B per molecule,
are reacted with (meth)acrylic acid esters (2) of the formula

$$H_2C{=}CR^2\overset{\overset{O}{\|}}{C}OR^6$$

in which $R^2$ has the same meaning as in Claim 1, and R6 is a monovalent hydrocarbon radical having 1 to 12 carbon atom(s) per radical, which can be substituted by an ether oxygen atom or a hydroxyl group, in the presence of catalysts (3) which promote the transesterification.

**5.** Process for the preparation of organosilicon compounds containing (meth)acryloxy groups according to Claim 1, 2 or 3, characterized in that organosilicon compounds (1) with units of the formula

$$B_aR_bSiX_cO_{\frac{4-(a+b+c)}{2}} \quad \text{(II)},$$

in which R, X, a, b and c have the same meanings as in Claim 1, and
B has the same meaning as in Claim 4, with the proviso that the compounds contain at least one radical B per molecule,
are esterified with (meth)acrylic acids in the presence of acid catalysts (4)

**6.** Process according to Claim 4 or 5, characterized in that the organopolysiloxanes containing (meth)acryloxy groups thus obtained are reacted with carboxylating agents or with vinyl ethers under acid catalysis.

**7.** Compositions which can be crosslinked by irradiation with light and comprise

(A) organopolysiloxanes containing (meth)acryloxy groups according to Claim 1, 2 or 3 and
(B) photosensitizers.

**8.** Use of the compositions according to Claim 7 for the production of coatings.

**Revendications**

**1.** Composés organosiliciés comportant des groupes (méth)acryloxy, avec des motifs de formule :

$$A_aR_bSiX_cO_{\frac{4-(a+b+c)}{2}} \quad \text{(I)},$$

où R est identique ou différent et représente un radical hydrocarbure monovalent, facultativement halogéné, avec 1 à 18 atomes de carbone par radical;
X est identique ou différent et est un atome de chlore ou un radical de formule $-OR^1$; où
$R^1$ représente un radical alcoyle avec 1 à 8 atomes de carbone par radical, qui peut être substitué par un atome d'oxygène d'éther;
a est 0 ou 1;
b est 0, 1, 2 ou 3;
c est 0, 1, 2 ou 3, et
la somme a+b+c est $\leq 4$, et
A est un radical de formule :

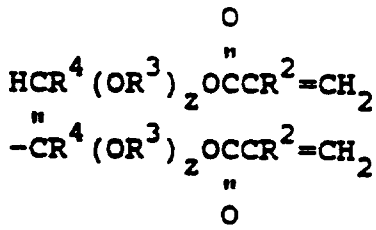

où z est 1, 2, 3 ou 4;
$R^2$ représente un atome d'hydrogène ou un radical méthyle;
$R^3$ représente un radical alcoylène linéaire ou ramifié, avec 1 à 6 atomes de carbone par radical, et
$R^4$ représente un radical alcoylène linéaire ou ramifié, avec 1 à 6 atomes de carbone par radical,
avec la condition que chaque molécule contient au moins un radical A.

**2.** Composés organosiliciés comportant des groupes (méth)acryloxy suivant la revendication 1, caractérisés en ce que ce sont des organopolysiloxanes de formule :

$$A_gR_{3-g}SiO(SiR_2O)_n(SiRAO)_mSiR_{3-g}A_g \qquad (III)$$

où R et A ont les mêmes significations qu'à la revendication 1;
g est 0 ou 1;
n est 0 ou un nombre entier de 1 à 1500, et
m est 0 ou un nombre entier de 1 à 100,
avec la condition que chaque molécule contient au moins un radical A.

**3.** Composés organosiliciés comportant des groupes (méth)acryloxy suivant la revendication 1 ou 2, caractérisés en ce que A est un radical de formule :

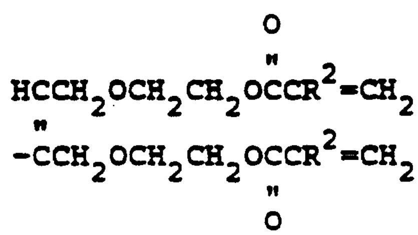

où $R^2$ représente un atome d'hydrogène ou un radical méthyle.

**4.** Procédé de préparation de composés organosiliciés comportant des groupes (méth)acryloxy, suivant les revendications 1, 2 ou 3, caractérisé en ce que les composés organosiliciés (1) avec des motifs de formule :

$$B_aR_bSiX_cO_{\frac{4-(a+b+c)}{2}} \qquad (II),$$

où R, X, a, b et c ont les mêmes significations qu'à la revendication 1, et
B est un radical de formule :

$$HCR^4(OR^3)_zOR^5$$
$$-\overset{''}{C}R^4(OR^3)_zOR^5$$

où z, $R^3$ et $R^4$ ont les mêmes significations qu'à la revendication 1, et
$R^5$ représente un atome d'hydrogène, un radical triméthylsilyle ou t-butyle,
avec la condition que chaque molécule contient au moins un radical B,
sont mis à réagir avec des esters (méth)acryliques (2) de formule :

$$H_2C{=}CR^2\overset{O}{\overset{\|}{C}}OR^6$$

où $R^2$ a la même signification qu'à la revendication 1, et
$R^6$ représente un radical hydrocarbure monovalent avec 1 à 12 atomes de carbone par radical, qui peut être substitué par un atome d'oxygène d'éther ou un radical hydroxyle,
en présence de catalyseurs (3) activant la réaction.

**5.** Procédé de préparation de composés organosiliciés comportant des groupes (méth)acryloxy, suivant les revendications 1, 2 ou 3, caractérisé en ce que les composés organosiliciés (1) avec des motifs de formule :

$$B_aR_bSiX_cO_{\frac{4-(a+b+c)}{2}} \qquad (II),$$

où R, X, a, b et c ont les mêmes significations qu'à la revendication 1, et
B a la même signification qu'à la revendication 4, avec la condition que chaque molécule contient au moins un radical B,
sont estérifiés avec des acides (méth)acryliques en présence de catalyseurs acides (4).

**6.** Procédé suivant la revendication 4 ou 5, caractérisé en ce que les organopolysiloxanes comportant des groupes (méth)acryloxy ainsi obtenus sont mis à réagir avec un agent de carboxylation ou avec des éthers vinyliques sous catalyse acide.

**7.** Compositions réticulables par irradiation au moyen de lumière, contenant :

(A) des organopolysiloxanes comportant des groupes (méth)acryloxy suivant la revendication 1, 2 ou 3, et
(B) des photosensibilisateurs.

**8.** Utilisation des compositions suivant la revendication 7, pour la préparation de revêtements.